# EUROPEAN PATENT APPLICATION

(11) **EP 3 904 146 A1**
(43) Date of publication of application: **03.11.2021**
(21) Application number: 21170802.9
(22) Date of filing: 27.04.2021
(51) Int. Cl.: B60L 50/70, B60L 58/30

(54) **INFORMATION PROCESSING DEVICE, CONTROL DEVICE, VEHICLE, AND WATER SPRINKLING METHOD**

(30) Priority: 30.04.2020 JP 2020080715
(71) Applicant: TOYOTA JIDOSHA KABUSHIKI KAISHA, Toyota-shi, Aichi-ken 471-8571 (JP)
(72) Inventor: UENOYAMA, Naoki, TOYOTA-SHI, AICHI-KEN, 471-8571 (JP); SUZUKI, Koichi, TOYOTA-SHI, AICHI-KEN, 471-8571 (JP); KAMIMURA, Ryo, TOYOTA-SHI, AICHI-KEN, 471-8571 (JP); NAKATA, Daisuke, TOYOTA-SHI, AICHI-KEN, 471-8571 (JP); TATSUMOTO, Yuki, TOYOTA-SHI, AICHI-KEN, 471-8571 (JP); FUTAKUCHI, Yusuke, TOYOTA-SHI, AICHI-KEN, 471-8571 (JP)
(74) Representative: Cabinet Beau de Loménie

(57) **Abstract**

An information processing device (10) includes a communication unit (11) and a control unit (13). The control unit (13) is configured to determine a water sprinkling place based on information indicating a road surface condition and is configured to send, to at least one vehicle (20) that is going to travel on the water sprinkling place, a notification instructing to sprinkle waste water of the at least one vehicle (20) by the communication unit (11).

## Description

### BACKGROUND OF THE INVENTION

### 1. Field of the Invention

The present disclosure relates to information processing devices, control devices, vehicles, and water sprinkling methods.

### 2. Description of Related Art

An on-board fuel cell system is known which controls draining of liquid water so that the liquid water will not be drained to the outside of a vehicle when the road surface condition immediately below the vehicle is presumed to be a predetermined road surface condition (e.g., Japanese Unexamined Patent Application Publication No. 2006-99994 (JP 2006-99994 A)).

### SUMMARY OF THE INVENTION

The above fuel cell system has room for improvement regarding draining of waste water to the outside of the vehicle. For example, the above fuel cell system does not disclose a place to which water is drained.

The present disclosure provides improving an external environment by draining water from a vehicle.

A first aspect of the present disclosure is an information processing device. The information processing device includes a communication unit and a control unit. The control unit is configured to determine a water sprinkling place based on information indicating a road surface condition and is configured to send, to at least one vehicle that is going to travel on the water sprinkling place, a notification instructing to sprinkle waste water of the at least one vehicle by the communication unit.

In the first aspect, the information indicating the road surface condition may be information indicating a temperature of a road surface, and the control unit may be configured to determine a road surface with a temperature below a first threshold temperature as the water sprinkling place.

In the first aspect, a temperature of the waste water to be sprinkled may be above the first threshold temperature.

In the first aspect, the information indicating the road surface condition may be information indicating a temperature of a road surface, and the control unit may be configured to determine a road surface with a temperature above a second threshold temperature as the water sprinkling place.

In the first aspect, the information indicating the road surface condition may be information indicating a temperature of a road surface, and the control unit may be configured to determine a road surface having a temperature above a second threshold temperature and including a crosswalk as the water sprinkling place.

In the first aspect, the information indicating the road surface condition may be information indicating a temperature of a road surface, and the control unit may be configured to determine a road surface having a temperature above a second threshold temperature and having a sidewalk located in a lateral direction of the road surface as the water sprinkling place.

In the first aspect, the control unit may be configured to estimate the temperature of the road surface by analyzing position information and thermal image data of the at least one vehicle received by the communication unit.

In the first aspect, the information indicating the road surface condition may be information indicating an amount of dust on a road surface, and the control unit may be configured to determine a road surface with an amount of dust larger than a first threshold amount as the water sprinkling place.

In the first aspect, the information indicating the road surface condition may be information indicating a pavement condition of a road surface, and the control unit may be configured to determine an unpaved road surface as the water sprinkling place.

In the first aspect, the information indicating the road surface condition may be information indicating a traffic volume of moving objects, and the control unit may be configured to determine a road surface with a traffic volume of moving objects smaller than a second threshold volume as the water sprinkling place.

In the first aspect, the control unit may be configured to estimate the vehicle that is going to travel on the water sprinkling place based on the position information of the at least one vehicle received by the communication unit.

In the first aspect. the control unit may be configured to determine that a preset reward is going to be given to a vehicle having performed sprinkling of the waste water out of a plurality of the vehicles that is going to travel on the water sprinkling place, in a case where the control unit sends the notification instructing to sprinkle the waste water to the vehicles by the communication unit.

In the first aspect, the plurality of vehicles may be vehicles that are utilized by a vehicle rental service, and the reward may be a discount on rental of the vehicle that is utilized by the vehicle rental service.

A second aspect of the present disclosure is a control device. The control device includes a control unit configured to cause a water sprinkling device to sprinkle waste water on a water sprinkling place determined based on information indicating a road surface condition.

A third aspect of the present disclosure is a vehicle. The vehicle includes: a control device including a control unit; and a water sprinkling device. The control unit is configured to cause the water sprinkling device to sprinkle waste water on a water sprinkling place determined based on information indicating a road surface condition.

In the third aspect, the vehicle may be a vehicle of a preset level of driving automation, and the control unit may be configured to control driving of the vehicle so that the water sprinkling place is included in a planned travel route of the vehicle.

In the third aspect, the vehicle may be utilized by a delivery service.

In the third aspect, the waste water maybe generated by an air conditioner mounted on the vehicle.

In the third aspect, the vehicle may be a fuel cell vehicle, and the waste water may be generated in a fuel cell stack of the vehicle.

A fourth aspect of the present disclosure is a water sprinkling method. The water sprinkling method includes: determining a water sprinkling place based on information indicating a road surface condition by an information processing device; and sprinkling waste water on the water sprinkling place by at least one vehicle.

According to the first, second, third, and fourth aspects of the present disclosure, an external environment can be improved by draining water from a vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates the configuration of a water sprinkling system according to an embodiment of the present disclosure;
FIG. 2 is a block diagram illustrating a detailed configuration of the water sprinkling system shown in FIG. 1; and
FIG. 3 is a sequence diagram illustrating an example of operation of the water sprinkling system shown in FIG. 1.

### DETAILED DESCRIPTION OF EMBODIMENTS

An embodiment of the present disclosure will be described with reference to the accompanying drawings. Of the components shown in the drawings, the same components are denoted with the same signs.

### System Configuration

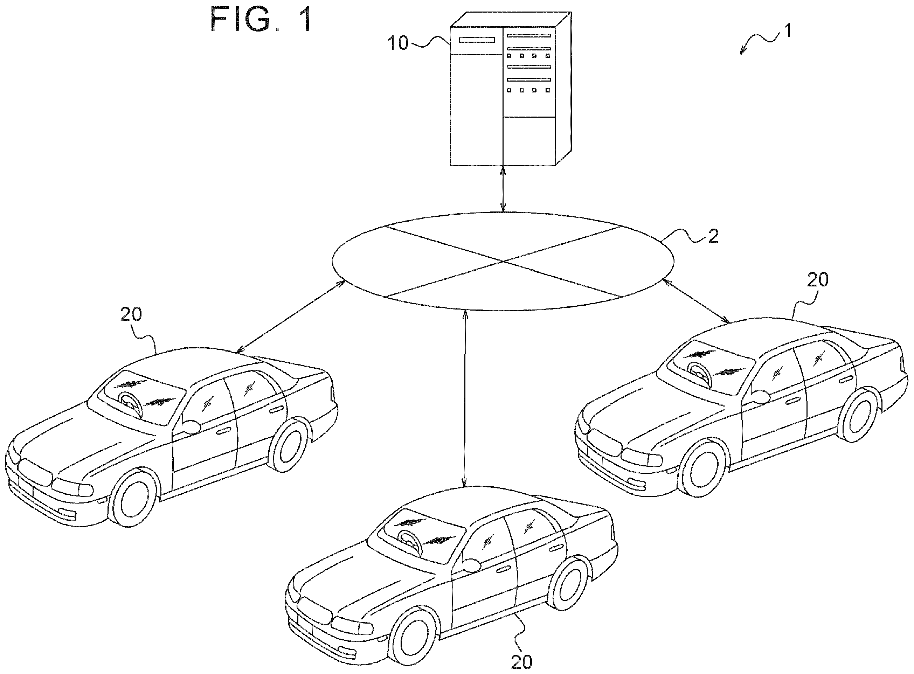

As shown in FIG. 1, a water sprinkling system 1 according to an embodiment of the present disclosure includes an information processing device 10 and at least one vehicle 20. In the water sprinkling system 1, waste water of the vehicle 20 is sprinkled to a water sprinkling place determined by the information processing device 10.

The information processing device 10 and the vehicle 20 can communicate with each other via a network 2. The network 2 may be any network such as a mobile communication network or the Internet.

The information processing device 10 may be any server. The information processing device 10 may be a vehicle rental server that provides a vehicle rental service. The vehicle rental service may be a service that provides leasing or rental of vehicles such as fuel cell vehicles (FCVs) or may be a service that provides a car sharing service. The information processing device 10 may be a vehicle dispatch server that provides a vehicle dispatch service. The vehicle dispatch service may be a service that dispatches an automobile etc. to a place designated by a user. The information processing device 10 may be a delivery server that provides a delivery service. The delivery service may be a service that provides delivery of packages.

The information processing device 10 may be a dedicated computer, general-purpose personal computer, cloud computing system, etc. configured to function as a server.

The vehicle 20 may be any type of automobile. For example, the vehicle 20 is a gasoline vehicle, a diesel vehicle, a hybrid vehicle (HV), a plug-in hybrid vehicle (PHV), an electric vehicle (EV), an FCV, etc. The vehicle 20 may be driven by a driver. Driving of the vehicle 20 may be automated at any level. For example, the level of driving automation is one of levels 1 to 5 defined by the Society of Automotive Engineers (SAE). The vehicle 20 may be a vehicle exclusively for Mobility as a Service (MaaS).

The vehicle 20 may be utilized as a rental vehicle when the information processing device 10 is a vehicle rental server. The vehicle 20 may be a lease or rental FCV when the information processing device 10 is a vehicle rental server that provides leasing or rental of FCVs. The vehicle 20 may be utilized as a shared vehicle for a car sharing service when the information processing device 10 is a vehicle rental server that provides a car sharing service. The vehicle 20 may be utilized as a taxi for a vehicle dispatch service when the information processing device 10 is a vehicle dispatch server. The vehicle 20 may be utilized as a delivery vehicle for a delivery service when the information processing device 10 is a delivery server. When the vehicle 20 is a delivery vehicle, the vehicle 20 may be a vehicle of any level of driving automation.

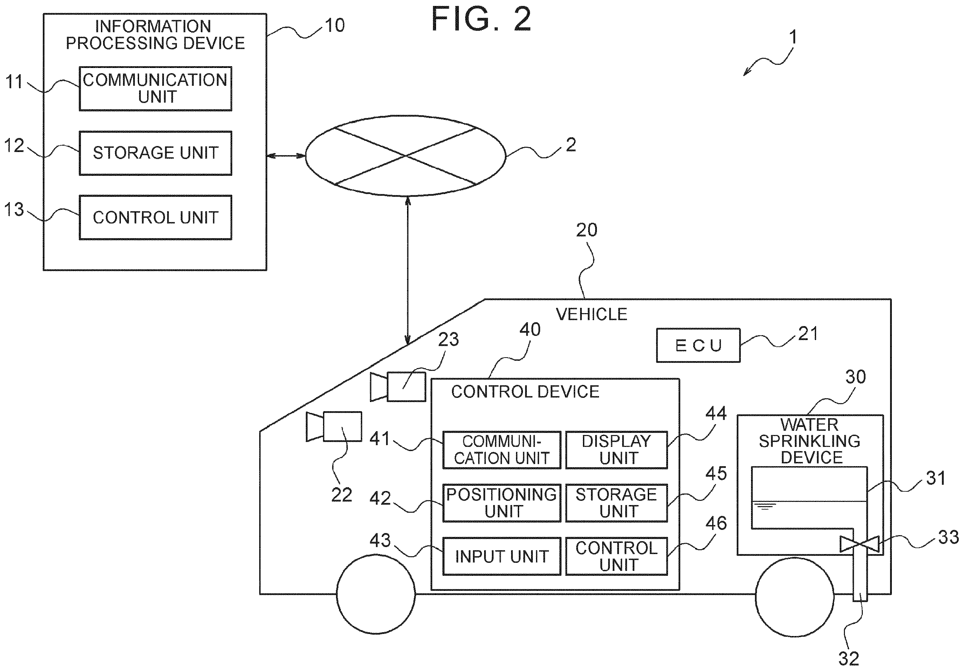

As shown in FIG. 2, the information processing device 10 includes a communication unit 11, a storage unit 12, and a control unit 13.

The communication unit 11 can be configured to include at least one communication module that can be connected to the network 2. For example, the communication module is a module compatible with a standard for a wired local area network (LAN), a wireless LAN, etc. The communication unit 11 can be connected to the network 2 by the communication module via a wired LAN or a wireless LAN.

The storage unit 12 can be configured to include at least one semiconductor memory, at least one magnetic memory, at least one optical memory, or a combination of at least two selected from the group consisting of a semiconductor memory, a magnetic memory, and an optical memory. The semiconductor memory is, e.g., a random access memory (RAM) or a read only memory (ROM). The RAM is, e.g., a static random access memory (SRAM) or a dynamic random access memory (DRAM). The ROM is, e.g., an electrically erasable programmable read only memory (EEPROM). The storage unit 12 may function as a main storage device, an auxiliary storage device, or a cache memory. The storage unit 12 stores data to be used for operation of the information processing device 10 and data obtained by operation of the information processing device 10.

The control unit 13 can be configured to include at least one processor, at least one dedicated circuit, or a combination thereof. The processor is a general-purpose processor such as a central processing unit (CPU) or a graphics processing unit (GPU), or a dedicated processor specializing in a specific process. The dedicated circuit is, e.g., a field-programmable gate array (FPGA) or an application specific integrated circuit (ASIC). The control unit 13 can execute a process related to operation of the information processing device 10 while controlling each unit of the information processing device 10.

Functions of the information processing device 10 can be implemented by executing an information processing program according to the present embodiment by a processor corresponding to the control unit 13. That is, the functions of the information processing device 10 can be implemented by software. The information processing program can cause a computer to function as the information processing device 10 by causing the computer to perform operation of the information processing device 10. That is, the computer can function as the information processing device 10 by performing operation of the information processing device 10 according to the information processing program.

In the present disclosure, the "program" can be recorded on a computer-readable non-transitory recording medium. The computer-readable non-transitory recording medium is, e.g., a magnetic recording device, an optical disc, a magneto-optical recording medium, or a ROM. The program may be distributed by, e.g., selling, transferring, or renting out a portable recording medium such as a digital versatile disc (DVD) or a compact disc read only memory (CD-ROM) having the program recorded thereon. The program may be stored in a storage of a server. The program stored in the storage of the server may be distributed by transferring this program to other computers. The program may be provided as a program product.

In the present disclosure, the "computer" may temporarily store, e.g., the program recorded on a portable recording medium or the program transferred from a server in a main storage device. The computer can also read the program stored in the main storage device by a processor and execute a process according to the read program by the processor. The computer may read the program directly from a portable recording medium and execute a process according to the program. The computer may execute a process according to the received program every time the program is transferred from a server to the computer. The computer may execute a process by what is called an application service provider (ASP) service that does not transfer the program from a server to the computer but implements functions by merely sending execution instructions and acquiring results. The program can include information that is used for processing by the computer and that is equivalent to the program. For example, data that is not a direct command for the computer but has properties defining a process to be executed by the computer is the "data equivalent to the program."

A part or all of the functions of the information processing device 10 may be implemented by a dedicated circuit corresponding to the control unit 13. That is, a part or all of the functions of the information processing device 10 may be implemented by hardware.

### Process of Determining Water Sprinkling Place

The control unit 13 determines a water sprinkling place based on information indicating the road surface condition. As will be described later, waste water of the vehicle 20 is sprinkled on the water sprinkling place. An external environment can be improved as will be described later by sprinkling the waste water of the vehicle 20 on the water sprinkling place. The information indicating the road surface condition may be information that allows determination of whether the external environment will be improved by sprinkling the waste water to the road surface. Examples of the information indicating the road surface condition and the process of determining a water sprinkling place will be described.

### Example 1

The information indicating the road surface condition may include information indicating the temperature of the road surface. In this example, the control unit 13 may determine the road surface with a temperature below a first threshold temperature as a water sprinkling place. The control unit 13 may receive position information of the vehicle 20 and thermal image data of the road surface generated by the vehicle 20 from at least one vehicle 20 via the network 2 by the communication unit 11. The control unit 13 may estimate the temperature of the road surface by analyzing the received thermal image data of the road surface. When the estimated temperature of the road surface is below the first threshold temperature, the control unit 13 may acquire the position information of the vehicle 20 received from the vehicle 20 as position information of the water sprinkling place.

The first threshold temperature may be set as appropriate based on the freezing temperature of the road surface. The first threshold temperature may be set as appropriate based on the freezing point of water etc. For example, the first threshold temperature is the freezing point of water or below.

The possibility that the road surface may freeze can be reduced by sprinkling the waste water of the vehicle 20 on the road surface with a temperature below the first threshold temperature. That is, the external environment can be improved. As will be described later, when the vehicle 20 is caused to sprinkle the waste water, the vehicle 20 may sprinkle the waste water with a preset set temperature or higher. The set temperature is the first threshold temperature or higher. As will be described later, the set temperature may be determined as appropriate according to the structure of a battery or motor of the vehicle 20. The possibility that the road surface may freeze can further be reduced by sprinkling the waste water with the set temperature or higher. As will be described later, when the vehicle 20 is caused to sprinkle the waste water, the vehicle 20 may spread either or both of an anti-icer and a deicer.

When the control unit 13 determines that the road surface with a temperature below the first threshold temperature is located in an area where snow has been observed, the control unit 13 may determine this road surface as a water sprinkling place. The control unit 13 may receive weather information from an external server via the network 2 by the communication unit 11. The external server may be any server that provides weather information. The weather information may be information on observed or forecasted weather in e.g., a preset area. The control unit 13 may determine based on the weather information whether the road surface with a temperature below the first threshold temperature is located in an area where snow has been observed.

### Example 2

In the case where the information indicating the road surface condition includes the information indicating the temperature of the road surface, the control unit 13 may determine the road surface with a temperature above a second threshold temperature as a water sprinkling place. The control unit 13 may estimate the temperature of the road surface in a manner similar to that of Example 1 described above. When the estimated temperature of the road surface is above the second threshold temperature, the control unit 13 may acquire the position information of the vehicle 20 received from the vehicle 20 as position information of the water sprinkling place, as in Example 1.

The second threshold temperature is higher than the first threshold temperature. The second threshold temperature may be set as appropriate based on the rise of the road surface temperature, e.g., during the day in summer. For example, the second threshold temperature is the average road surface temperature during the day in summer in fine weather. The second threshold temperature may be set as appropriate based on the impact of radiant heat from the road surface on small dogs, children, etc. The second threshold temperature may be determined as appropriate based on the heat resistant temperature of a road surface pavement material. For example, the second threshold temperature is the heat resistant temperature of the road surface pavement material or below.

By sprinkling the waste water of the vehicle 20 on the road surface with a temperature above the second threshold temperature, the waste water sprinkled on the road surface can take heat away from either or both of the road surface or an area around the road surface and evaporate from the road surface. As the waste water sprinkled on the road surface takes heat away from either or both of the road surface or the area around the road surface and evaporates from the road surface, either or both of the road surface and the area around the road surface can be cooled. That is, the external environment can be improved. Moreover, for example, in the case where the second threshold temperature is set based on the rise of the road surface temperature during the day in summer, the possibility that pedestrians etc. in the area around the road surface may feel discomfort from heat can be reduced as the area around the road surface is cooled. For example, in the case where the second threshold temperature is determined based on the heat resistant temperature of the road surface pavement material, deterioration of the road surface pavement material can be reduced as the road surface is cooled.

### Example 3

In the case where the information indicating the road surface condition includes the information indicating the temperature of the road surface, the control unit 13 may determine the road surface having a temperature above the second threshold temperature and including a crosswalk as a water sprinkling place. The road surface including a crosswalk may include an area of the road surface that is occupied by the vehicle 20 when the vehicle 20 stops temporarily at the crosswalk. The control unit 13 may estimate the temperature of the road surface in a manner similar to that of Example 1. When the estimated temperature of the road surface is above the second threshold temperature and the road surface includes a crosswalk, the control unit 13 may acquire the position information of the vehicle 20 received from the vehicle 20 as position information of the water sprinkling place, as in Example 1.

The control unit 13 may receive map information from an external server of a local government etc. via the network 2 by the communication unit 11. The control unit 13 may determine based on the map information whether the road surface with a temperature above the second threshold temperature includes a crosswalk. The control unit 13 may receive captured image data of the surroundings of the vehicle 20 together with the thermal image data from the vehicle 20 via the network 2 by the communication unit 11. The control unit 13 may detect the road surface having a temperature above the second threshold temperature and including a crosswalk by analyzing the thermal image data and captured image data received from the vehicle 20.

There is a case where the vehicle 20 stops at a crosswalk. This includes when the traffic light turns red. While the vehicle 20 is stopped, the driver of the vehicle 20 can take a hand off the steering wheel to input a draining instruction via an input unit 43 that will be described later. An area around the crosswalk etc. can be cooled by sprinkling waste water of the vehicle 20 on the road surface including the crosswalk. That is, the external environment can be improved. Moreover, the possibility that pedestrians etc. crossing the crosswalk may feel discomfort from heat can be reduced as the area around the crosswalk etc. is cooled.

### Example 4

In the case where the information indicating the road surface condition includes the information indicating the temperature of the road surface, the control unit 13 may determine the road surface having a temperature above the second threshold temperature and having a sidewalk located in the lateral direction of the road surface as a water sprinkling place. The control unit 13 may estimate the temperature of the road surface in a manner similar to that of Example 1. When the estimated temperature of the road surface is above the second threshold temperature and a sidewalk is located in the lateral direction of the road surface, the control unit 13 may acquire the position information of the vehicle 20 received from the vehicle 20 as position information of the water sprinkling place, as in Example 1. The control unit 13 may determine based on the map information whether the sidewalk is located in the lateral direction of the road surface with a temperature above the second threshold temperature, in a manner similar to that of Example 3 described above. The control unit 13 may detect the road surface having a temperature above the second threshold temperature and having a sidewalk located in the lateral direction of the road surface by analyzing the thermal image data and captured image data received from the vehicle 20, in a manner similar to that of Example 3.

An area around the sidewalk etc. can be cooled by sprinkling waste water of the vehicle 20 on the road surface having the sidewalk located in the lateral direction of the road surface. That is, the external environment can be improved. Moreover, the possibility that pedestrians etc. walking on the sidewalk may feel discomfort from heat can be reduced as the area around the sidewalk etc. is cooled.

### Example 5

The information indicating the road surface condition may include information indicating the amount of dust on the road surface. In this example, the control unit 13 may determine the road surface with the amount of dust larger than a first threshold amount as a water sprinkling place. The control unit 13 may acquire the information indicating the amount of dust on the road surface by estimating the amount of dust on the road surface. The control unit 13 may estimate the amount of dust on the road surface based on information on an observed or forecasted wind speed on the ground. When the wind is strong, dust carried by the wind can accumulate on the road surface. The dust may be at least one of the following: dust, pollen such as cedar pollen, and yellow dust particles. The control unit 13 may acquire the information on the observed or forecasted wind speed on the ground by receiving the weather information in a manner similar to that of Example 1. The first threshold amount may be determined as appropriate according to the type of dust. The first threshold amount may be determined as appropriate based on the impact of dust on the human body. When the estimated amount of dust is larger than the first threshold amount, the control unit 13 may acquire position information of the road in the area where the information on the wind speed used to estimate the amount of dust has been observed or forecasted as position information of the water sprinkling place.

The possibility that dust may float in the air can be reduced by sprinkling the waste water of the vehicle 20 on the road surface with the amount of dust larger than the first threshold amount. That is, the external environment can be improved.

### Example 6

The information indicating the road surface condition may include information indicating the pavement condition of the road surface. In this example, the control unit 13 may determine an unpaved road surface as a water sprinkling place. The control unit 13 may receive information on road construction from an external server of a local government etc. via the network 2 by the communication unit 11. The information on road construction may include information indicating the type of road construction and position information of a place where the road construction is underway. Depending on the type of road construction, the pavement of the road surface may be temporarily removed. The control unit 13 may detect an unpaved road surface by analyzing the information indicating the type of road construction. When the control unit 13 detects the unpaved road surface by analyzing the information indicating the type of road construction, the control unit 13 may acquire position information of the place where the road construction is underway as position information of the water sprinkling place.

The surface of the earth may be exposed on unpaved road surfaces. Accordingly, dust is more likely to be blown up from unpaved road surfaces into the air due to wind etc., as compared to paved road surfaces. The possibility that dust may be blown up from the unpaved road surface can be reduced by sprinkling the waste water of the vehicle 20 on the unpaved road surface. That is, the external environment can be improved.

### Example 7

The information indicating the road surface condition may include information indicating the traffic volume of moving objects traveling on the road surface. In this example, the control unit 13 may determine the road surface with the traffic volume of moving objects smaller than a second threshold volume as a water sprinkling place. The moving objects may be any vehicle that can travel on the road surface. The moving objects may include two-wheeled vehicles, three-wheeled vehicles, four-wheeled vehicles, etc. The control unit 13 may receive the position information of the vehicle 20 and traveling information of the vehicle 20 from at least one vehicle 20 via the network 2 by the communication unit 11. The control unit 13 may estimate the traffic volume of moving objects at the position of the vehicle 20 by analyzing the received position information of the vehicle 20 and traveling information of the vehicle 20. When the estimated traffic volume of moving objects is smaller than the second threshold volume, the control unit 13 may acquire the position information of the vehicle 20 received from the vehicle 20 as position information of the water sprinkling place, as in Example 1.

The second threshold volume may be set as appropriate based on the traffic volume on the road surface during traffic congestion. For example, the second threshold volume is the traffic volume on the road surface during traffic congestion or less. During traffic congestion, the road surface can be polluted by exhaust gas emitted from vehicles. The possibility that the road surface may be polluted by exhaust gas can be reduced by sprinkling the waste water of the vehicle 20 on the road surface with the traffic volume of moving objects smaller than the second threshold volume. That is, the external environment can be improved.

### Process of Estimating Vehicle

When the control unit 13 determines the water sprinkling place, the control unit 13 estimates the vehicle 20 that is going to travel on the water sprinkling place from the vehicles 20 included in the water sprinkling system 1. The control unit 13 may receive the position information of the vehicle 20 from at least one vehicle 20 via the network 2 by the communication unit 11. The control unit 13 may estimate the vehicle 20 that is going to travel on the water sprinkling place from the vehicles 20 included in the water sprinkling system 1, based on the position information of at least one vehicle 20 received by the communication unit 11.

In the case where the information processing device 10 is a delivery server and the vehicle 20 is utilized as a delivery vehicle, the control unit 13 can determine a delivery route for the vehicle 20 in advance. The control unit 13 may estimate the vehicle 20 that is going to travel on the water sprinkling place from the vehicles 20 included in the water sprinkling system 1, based on the predetermined delivery route for the vehicle 20 and the current position information of the vehicle 20.

When the information processing device 10 is a vehicle dispatch server and the vehicle 20 is utilized as a taxi, the control unit 13 can acquire position information of a passenger pickup location and position information of a passenger drop-off location. In vehicle dispatch services, position information of a passenger pickup location and position information of a passenger drop-off location can be determined in advance before a passenger uses a taxi. The control unit 13 may estimate the vehicle 20 that is going to travel on the water sprinkling place from the vehicles 20 included in the water sprinkling system 1, based on the predetermined position information of the passenger pickup location and position information of the passenger drop-off location and the current position information of the vehicle 20.

### Process of Sending Notification Instructing to Sprinkle Waste Water

The control unit 13 may send a notification instructing to sprinkle the waste water of the vehicle 20 to at least one vehicle 20 that is going to travel on the water sprinkling place via the network 2 by the communication unit 11. The control unit 13 may send to the vehicle 20 position information of the water sprinkling place together with the notification to sprinkle the waste water of the vehicle 20. When the control unit 13 determines the road surface with a temperature below the first threshold temperature as a water sprinkling place, the control unit 13 may send to the vehicle 20 a notification instructing to spread either or both of an anti-icer and a deicer together with the notification instructing to sprinkle the waste water of the vehicle 20. When the control unit 13 determines the road surface with a temperature below the first threshold temperature as a water sprinkling place, the control unit 13 may send to the vehicle 20 a notification instructing to sprinkle the waste water with the preset set temperature or higher.

### Process of Determining Reward

The control unit 13 may determine that a preset reward will be given to each vehicle 20 having performed sprinkling of the waste water out of a plurality of vehicles 20 that is going to travel on the water sprinkling place, in the case where the control unit 13 sends a notification instructing to sprinkle the waste water to the plurality of vehicles 20. The control unit 13 can receive a notification that the vehicle 20 has performed sprinkling of the waste water together with information indicating the identifier of the vehicle 20 from the vehicle 20 via the network 2 by the communication unit 11. The control unit 13 may identify the vehicle 20 having performed sprinkling of the waste water by receiving the notification that the vehicle 20 has performed sprinkling of the waste water etc. Since the preset reward is given to each vehicle 20 having performed sprinkling of the waste water, the drivers of the vehicles 20 can actively input an instruction to sprinkle the waste water via the input unit 43 and cause the vehicle 20 to perform sprinkling of the waste water. As the drivers of the vehicles 20 actively cause the vehicle 20 to perform sprinkling of the waste water, the waste water can be efficiently sprinkled on the water sprinkling place.

In the case where the information processing device 10 is a vehicle rental server and the vehicles 20 are utilized as rental vehicles, the reward may be a discount on rental of the vehicle 20. For example, in the case where the information processing device 10 is a vehicle rental server that provides leasing or rental of FCVs and the vehicles 20 are lease or rental FCVs, the reward may be a discount on lease or rental of the vehicle 20. For example, in the case where the information processing device 10 is a vehicle rental server that provides a car sharing service and the vehicles 20 are shared vehicles, the reward is a discount on rental of the vehicle 20. With this configuration, the users of the vehicles 20 for the rental service can actively cause the vehicle 20 to perform sprinkling of the waste water.

In the case where the information processing device 10 is a vehicle dispatch server and the vehicles 20 are utilized as taxis, the reward may be an incentive to the driver of the vehicle 20. In the case where the information processing device 10 is a delivery server and the vehicles 20 are utilized as delivery vehicles, the reward may be an incentive to the driver of the vehicle 20. With this configuration, the drivers can actively cause the vehicle 20 utilized as a taxi to perform sprinkling of the waste water.

As shown in FIG. 2, the vehicle 20 includes an electronic control unit (ECU) 21, a water sprinkling device 30, and a control device 40. The vehicle 20 may further include a camera 22 and a camera 23. The ECU 21, the camera 22, the camera 23, the water sprinkling device 30, and the control device 40 are connected to each other so that they can communicate with each other.

The ECU 21 is a control unit that controls various devices mounted on the vehicle 20. The ECU 21 can output the traveling information of the vehicle 20 to the control device 40. The traveling information of the vehicle 20 may include at least one of the following information: information on the average speed of the vehicle 20, information on acceleration of the vehicle 20, etc.

The camera 22 may be an infrared camera. The camera 22 can generate a thermal image by detecting infrared rays that are electromagnetic waves propagating from a plurality of object points. The camera 22 may be located at such a position that it can generate a thermal image of the road surface around the vehicle 20 when the vehicle 20 is located on the road surface. The camera 22 may be mounted on the dashboard etc. of the vehicle 20.

The camera 23 may be a visible light camera. The camera 23 can generate a captured image by detecting visible light that is electromagnetic waves propagating from a plurality of object points. The camera 23 may be located at such a position that it can generate a captured image of the road surface around the vehicle 20 when the vehicle 20 is located on the road surface. The camera 23 may be mounted on the dashboard etc. of the vehicle 20.

The water sprinkling device 30 sprinkles the waste water of the vehicle 20 as controlled by the control device 40. The water sprinkling device 30 includes at least one tank 31, at least one drain pipe 32, and at least one valve 33. The water sprinkling device 30 may further include a spreading device. The spreading device can spread either an anti-icer or a deicer.

The tank 31 may be a container made of plastic, glass, metal, etc. The waste water of the vehicle 20 is stored in the tank 31.

In the present disclosure, the "waste water" may be unnecessary water generated in the vehicle 20. In the case where the vehicle 20 is equipped with an air conditioner, the waste water may be water generated by the air conditioner. In the case where the vehicle 20 is a hydrogen-fueled FCV, the waste water may be water generated in a fuel cell (FC) stack. In the FC stack, water can be generated when electricity is generated from the chemical reaction between hydrogen and oxygen.

The tank 31 may be configured so that heat generated by the parts mounted on the vehicle 20 is transferred to the waste water stored in the tank 31. The tank 31 may be configured so that the waste water stored in the tank 31 becomes equal to or higher than the preset set temperature due to heat generated by the battery or motor of the vehicle 20. The set temperature may be determined as appropriate according to the structure of the battery or motor of the vehicle 20. The tank 31 may be mounted near the battery or motor of the vehicle 20 so that the waste water stored in the tank 31 becomes equal to or higher than the set temperature due to the heat from the battery or motor. Hereinafter, the tank 31 configured so that the waste water stored in the tank 31 becomes equal to or higher than the set temperature due to the heat generated by the battery or motor is sometimes referred to as the "tank 31a." In the case where the water sprinkling device 30 includes a plurality of tanks 31, a part of the tanks 31 may be the tank 31a.

The drain pipe 32 may be a tubular member made of plastic, glass, metal, etc. The drain pipe 32 has its one end connected to the tank 31. When the water sprinkling device 30 includes a plurality of tanks 31 and a plurality of drain pipes 32, each drain pipe 32 may have its one end connected to a corresponding one of the tanks 31. The drain pipe 32 has the other end exposed to the outside of the vehicle 20. Hereinafter, the drain pipe 32 with its one end connected to the tank 31a is sometimes referred to as the "drain pipe 32a."

The valve 33 is attached to the drain pipe 32. When the water sprinkling device 30 includes a plurality of drain pipes 32 and a plurality of valves 33, each valve 33 may be attached to a corresponding one of the drain pipes 32. The valve 33 may be a solenoid operated valve. The valve 33 opens and closes based on an electrical signal from the control device 40. Hereinafter, the valve 33 attached to the drain pipe 32a is sometimes referred to as the "valve 33a."

The control device 40 causes the water sprinkling device 30 to sprinkle the waste water. The control device 40 includes a communication unit 41, a positioning unit 42, the input unit 43, a display unit 44, a storage unit 45, and a control unit 46. The storage unit 45 and the control unit 46 may be a part of the ECU 21.

The communication unit 41 can be configured to include at least one communication module that can be connected to the network 2. For example, the communication module is a module compatible with a mobile communication standard such as Long Term Evolution (LTE), the 4th generation (4G), or the 5th generation (5G).

The positioning unit 42 can acquire the position information of the vehicle 20. The positioning unit 42 outputs the position information of the vehicle 20 to the control unit 46. The positioning unit 42 can be configured to include a Global Positioning System (GPS) receiver module.

The input unit 43 can accept input from the user. The input unit 43 can be configured to include at least one input interface that can accept input from the user. The input interface may be a physical key, a capacitive key, a pointing device, a touch screen integral with a display, a microphone, etc. The input unit 43 may be provided in the control device 40 or may be an external input device connected to the control device 40. In the case where the input unit 43 is an external input device connected to the control device 40, the input unit 43 and the control device 40 may be connected by any connection method. Examples of the connection method include Universal Serial Bus (USB), High-Definition Multimedia Interface (HDMI) (registered trademark), and Bluetooth (registered trademark).

The display unit 44 can display any information. The display unit 44 can be configured to include a display. The display may be a liquid crystal display (LCD), an organic electro-luminescence (EL) display, etc. The display unit 44 may be provided in the control device 40 or may be an external output device connected to the control device 40. In the case where the display unit 44 is an external output device connected to the control device 40, the display unit 44 and the control device 40 may be connected by any connection method. Examples of the connection method include USB, HDMI (registered trademark), and Bluetooth (registered trademark).

Like the configuration of the storage unit 12, the storage unit 45 can be configured to include at least one semiconductor memory, at least one magnetic memory, at least one optical memory, or a combination of at least two selected from the group consisting of a semiconductor memory, a magnetic memory, and an optical memory. The storage unit 45 may function as a main storage device, an auxiliary storage device, or a cache memory. The storage unit 45 stores data to be used for operation of the control device 40 and data obtained by operation of the control device 40.

Like the control unit 13, the control unit 46 can be configured to include at least one processor, at least one dedicated circuit, or a combination thereof. The control unit 46 can execute a process related to operation of the control device 40 while controlling each unit of the control device 40.

Functions of the control device 40 are implemented by executing a control program according to the present embodiment by a processor corresponding to the control unit 46. That is, the functions of the control device 40 are implemented by software. The control program causes a computer to function as the control device 40 by causing the computer to perform operation of the control device 40. That is, the computer functions as the control device 40 by performing operation of the control device 40 according to the control program.

A part or all of the functions of the control device 40 may be implemented by a dedicated circuit corresponding to the control unit 46. That is, a part or all of the functions of the control device 40 may be implemented by hardware.

### Process of Sending Various Types of Information

The control unit 46 may acquire the position information of the vehicle 20 by the positioning unit 42 at preset time intervals. The control unit 46 may send the position information of the vehicle 20 to the information processing device 10 via the network 2 by the communication unit 41 at the time intervals. The time interval may be set as appropriate based on the average speed of the vehicle 20 etc.

The control unit 46 may acquire the thermal image data generated by the camera 22 at preset time intervals. The control unit 46 may send the thermal image data to the information processing device 10 via the network 2 by the communication unit 41 at the time intervals. The time interval may be set as appropriate based on the average speed of the vehicle 20 etc. The control unit 46 may send the thermal image data generated by the camera 22 to the information processing device 10 while the vehicle 20 is stopped.

The control unit 46 may acquire the captured image data generated by the camera 23 at preset time intervals. The control unit 46 may send the captured image data to the information processing device 10 via the network 2 by the communication unit 41 at the time intervals. The time interval may be set as appropriate based on the average speed of the vehicle 20 etc. The control unit 46 may send the captured image data generated by the camera 23 to the information processing device 10 while the vehicle 20 is stopped.

The control unit 46 may acquire the traveling information of the vehicle 20 from the ECU 21 at preset time intervals. The control unit 46 may send the traveling information of the vehicle 20 to the information processing device 10 via the network 2 by the communication unit 41 at the time intervals. The time interval may be set as appropriate based on the average speed of the vehicle 20 etc.

### Process of Sprinkling Waste Water

The control unit 46 can receive a notification instructing to sprinkle the waste water of the vehicle 20 from the information processing device 10 via the network 2 by the communication unit 41. When the control unit 46 receives the notification instructing to sprinkle the waste water of the vehicle 20, the control unit 46 causes the water sprinkling device 30 to sprinkle the waste water of the vehicle 20 as in the following examples.

### Example 1

The control unit 46 may cause the display unit 44 to display an instruction to sprinkle the waste water of the vehicle 20 when the control unit 46 receives a notification instructing to sprinkle the waste water of the vehicle 20 from the information processing device 10. By visually looking at the instruction displayed on the display unit 44, the driver of the vehicle 20 can know that the information processing device 10 has instructed the vehicle 20 to sprinkle the waste water of the vehicle 20. When performing sprinkling of the waste water of the vehicle 20, the driver can enter an input instructing to perform sprinkling of the waste water via the input unit 43.

The control unit 46 can receive the position information of the water sprinkling place together with the notification instructing to sprinkle the waste water of the vehicle 20 from the information processing device 10. In this case, the control unit 46 may cause the display unit 44 to display the position information of the water sprinkling place together with the instruction to sprinkle the waste water of the vehicle 20. The driver of the vehicle 20 can know the water sprinkling place by visually looking at the water sprinkling place displayed on the display unit 44. The driver of the vehicle 20 can enter an input instructing to perform sprinkling of the waste water via the input unit 43 when the vehicle 20 reaches the water sprinkling place.

The control unit 46 can accept the input instructing to perform sprinkling of the waste water by the input unit 43. When the control unit 46 accepts the input instructing to perform sprinkling of the waste water, the control unit 46 causes the water sprinkling device 30 to sprinkle the waste water. For example, the control unit 46 outputs an electrical signal for opening the valve 33 to the valve 33. When the valve 33 is opened, a part of the waste water stored in the tank 31 is discharged to the outside of the vehicle 20 through the drain pipe 32. The control unit 46 outputs an electrical signal for closing the valve 33 to the valve 33 after a preset set time elapses. The set time may be set as appropriate according to the amount of waste water that can be sprinkled from the tank 31 at a time.

### Example 2

The control unit 46 may automatically cause the water sprinkling device 30 to sprinkle the waste water when the control unit 46 receives a notification instructing to sprinkle the waste water of the vehicle 20 from the information processing device 10. In the case where the vehicle 20 is a vehicle of a preset level of driving automation, the control unit 46 may control driving of the vehicle 20 so that the water sprinkling place received from the information processing device 10 is included in a planned travel route of the vehicle 20. The control unit 46 may cause the water sprinkling device 30 to sprinkle the waste water when the vehicle 20 reaches the water sprinkling place.

For example, in the case where the information processing device 10 is a delivery server and the vehicle 20, which is a delivery vehicle, is a vehicle of any level of driving automation, the control unit 46 may adjust the delivery route of the vehicle 20 so that the water sprinkling place received from the information processing device 10 is included in the delivery route. The control unit 46 may cause the water sprinkling device 30 to sprinkle the waste water when the vehicle 20 reaches the water sprinkling place.

### Example 3

The control unit 46 can receive a notification instructing to spread either or both of an anti-icer and a deicer together with a notification instructing to sprinkle the waste water of the vehicle 20 from the information processing device 10 by the communication unit 41. In this case, the control unit 46 may cause the water sprinkling device 30 to sprinkle the waste water and cause the spreading device included in the water sprinkling device 30 to spread either an anti-icer or a deicer.

As described above in Example 1 of "Process of Sprinkling Waste Water," the control unit 46 may accept an input instructing to perform sprinkling of the waste water by the input unit 43. In this case, when the control unit 46 accepts the input instructing to perform sprinkling of the waste water, the control unit 46 may cause the water sprinkling device 30 to sprinkle the waste water and cause the spreading device included in the water sprinkling device 30 to spread either an anti-icer or a deicer.

As described above in Example 2 of "Process of Sprinkling Waste Water," the control unit 46 may automatically cause the water sprinkling device 30 to sprinkle the waste water. In this case, the control unit 46 may automatically cause the water sprinkling device 30 to sprinkle the waste water and automatically cause the spreading device included in the water sprinkling device 30 to spread either an anti-icer or a deicer.

### Example 4

The control unit 46 can receive a notification instructing to sprinkle the waste water with the preset set temperature or higher. In this case, the control unit 46 causes the water sprinkling device 30 to sprinkle the waste water with the first threshold temperature or higher. For example, the control unit 46 outputs an electrical signal for opening the valve 33a to the valve 33a. When the valve 33a is opened, a part of the waste water stored in the tank 31a is discharged to the outside of the vehicle 20 through the drain pipe 32a. As described above, the tank 31a is configured so that heat generated by the battery or motor of the vehicle 20 is transferred to the waste water stored in the tank 31a. As the waste water stored in the tank 31a is discharged from the vehicle 20, the waste water with a temperature above the first threshold temperature is sprinkled. As described above, the control unit 46 may output an electrical signal for closing the valve 33a to the valve 33a after a preset set time elapses.

As described above in Example 1 of "Process of Sprinkling Waste Water," when the control unit 46 accepts an input instructing to perform sprinkling of the waste water by the input unit 43, the control unit 46 may cause the water sprinkling device 30 to sprinkle the waste water with a temperature above the first threshold temperature. As described above in Example 2 of "Process of Sprinkling Waste Water," the control unit 46 may automatically cause the water sprinkling device 30 to sprinkle the waste water with a temperature above the first threshold temperature.

### Process of Sending Notification That Sprinkling of Waste Water Has Been Performed

Once the control unit 46 causes the water sprinkling device 30 to sprinkle the waste water, the control unit 46 sends a notification that sprinkling of the waste water has been performed together with the information indicating the identifier of the vehicle 20 to the information processing device 10 via the network 2 by the communication unit 41.

### System Operation

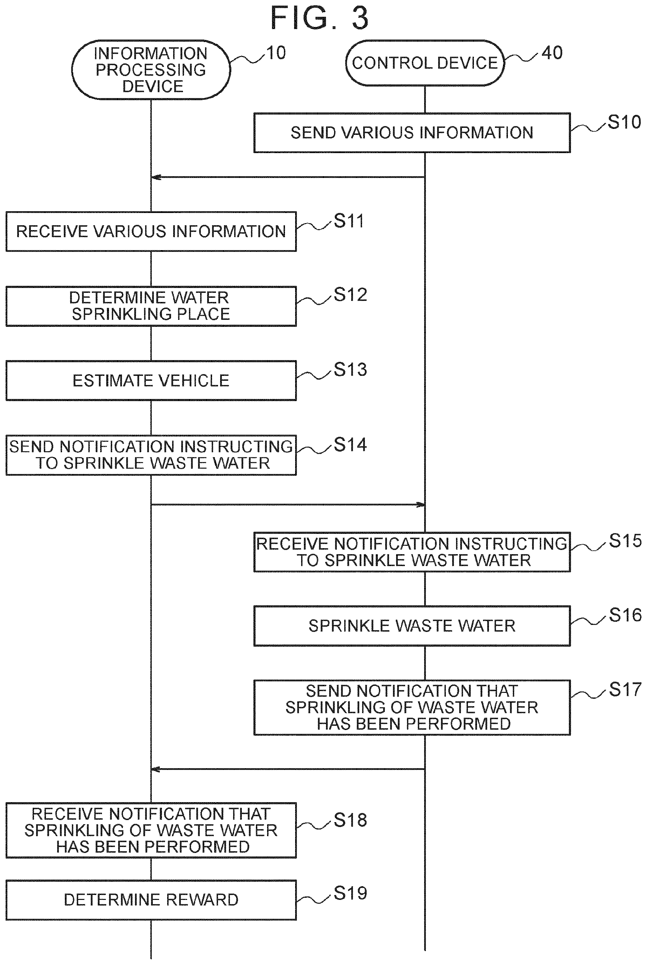

An example of operation of the water sprinkling system 1 shown in FIG. 1 will be described with reference to FIG. 3. This operation is an example of a water sprinkling method according to the present embodiment.

In the control device 40, the control unit 46 sends various types of information to the information processing device 10 via the network 2 by the communication unit 41 (step S10). The various types of information may include at least one selected from the group consisting of the position information of the vehicle 20, the thermal image data generated by the camera 22, the captured image data generated by the camera 23, and the traveling information of the vehicle 20.

In the information processing device 10, the control unit 13 receives the various types of information from the control device 40 via the network 2 by the communication unit 11 (step S11). The control unit 13 determines the water sprinkling place based on the information indicating the road surface condition (step S12). The control unit 13 estimates the vehicle 20 that is going to travel on the determined water sprinkling place (step S13). The control unit 13 sends a notification instructing to sprinkle the waste water of the vehicle 20 to the vehicle 20 that is going to travel on the water sprinkling place via the network 2 by the communication unit 11 (step S14).

In the control device 40, the control unit 46 receives the notification instructing to sprinkle the waste water of the vehicle 20 from the information processing device 10 via the network 2 by the communication unit 41 (step S15). The control unit 46 causes the water sprinkling device 30 to sprinkle the waste water (step S16). Once the control unit 46 causes the water sprinkling device 30 to sprinkle the waste water, the control unit 46 sends a notification that sprinkling of the waste water of the vehicle 20 has been performed together with the information indicating the identifier of the vehicle 20 to the information processing device 10 via the network 2 by the communication unit 41 (step S17).

In the information processing device 10, the control unit 13 receives the notification that sprinkling of the waste water of the vehicle 20 has been performed together with the information indicating the identifier of the vehicle 20 from the vehicle 20 via the network 2 by the communication unit 11 (step S18). In the case where the control unit 13 sends the notification instructing to sprinkle the waste water to a plurality of vehicles 20 that are going to travel on the water sprinkling place, the control unit 13 determines that a preset reward is given to each vehicle 20 having performed sprinkling of the waste water out of the vehicles 20 (step S 19).

As described above, in the water sprinkling system 1, the information processing device 10 determines the water sprinkling place based on the information indicating the road surface condition. The vehicle 20 sprinkles the waste water of the vehicle 20 on the water sprinkling place. With such a configuration, the external environment can be improved by sprinkling the waste water of the vehicle 20.

The present disclosure is not limited to the above embodiment. For example, a plurality of blocks illustrated in the block diagram may be integrated, or one block may be divided into blocks. Instead of performing the plurality of steps of the flowchart in chronological order as described above, the steps may be performed in parallel or in a different order either according to the processing capacity of the device that performs each step or as necessary. Other changes can also be made to the present disclosure without departing from the spirit and scope of the present disclosure.

For example, in the above embodiment, the information processing device 10 determines the water sprinkling place. However, the control device 40 may determine the water sprinkling place. In this case, the control unit 46 of the control device 40 may receive from other vehicles 20 located near the vehicle 20 equipped with the control device 40 thermal image data generated by the cameras 22 of these other vehicles 20 by the communication unit 41. Communication between the vehicle 20 equipped with the control device 40 and these other vehicles 20 may be vehicle-to-vehicle communication. The communication unit 41 may include a communication module for the vehicle-to-vehicle communication. These other vehicles 20 may be stopped vehicles. The control unit 46 may determine the water sprinkling place based on the thermal image data, which is the information indicating the road surface condition, acquired from these other vehicles 20. The control unit 46 may cause the water sprinkling device 30 to sprinkle the waste water on the determined water sprinkling place.

For example, in the information processing device 10, the control unit 13 may receive the information indicating the road surface condition from an external server of a local government etc. via the network 2 by the communication unit 11. The control unit 13 may receive a notification instructing to determine the water sprinkling place from the external server of the local government etc. via the network 2 by the communication unit 11. The control unit 13 may determine the water sprinkling place when it receives the notification instructing to determine the water sprinkling place.

## Claims

1. An information processing device (10) comprising:
a communication unit (11); and
a control unit (13) configured to determine a water sprinkling place based on information indicating a road surface condition and configured to send, to at least one vehicle (20) that is going to travel on the water sprinkling place, a notification instructing to sprinkle waste water of the at least one vehicle (20) by the communication unit (11).

2. The information processing device (10) according to claim 1, wherein:
the information indicating the road surface condition is information indicating a temperature of a road surface; and
the control unit (13) is configured to determine a road surface with a temperature below a first threshold temperature as the water sprinkling place.

3. The information processing device (10) according to claim 2, wherein a temperature of the waste water to be sprinkled is above the first threshold temperature.

4. The information processing device (10) according to any of claims 1 to 3, wherein:
the information indicating the road surface condition is information indicating a temperature of a road surface; and
the control unit (13) is configured to determine a road surface with a temperature above a second threshold temperature as the water sprinkling place.

5. The information processing device (10) according to any of claims 1 to 3, wherein:
the information indicating the road surface condition is information indicating a temperature of a road surface; and
the control unit (13) is configured to determine a road surface having a temperature above a second threshold temperature and including a crosswalk as the water sprinkling place.

6. The information processing device (10) according to any of claims 1 to 3, wherein:
the information indicating the road surface condition is information indicating a temperature of a road surface; and
the control unit (13) is configured to determine a road surface having a temperature above a second threshold temperature and having a sidewalk located in a lateral direction of the road surface as the water sprinkling place.

7. The information processing device (10) according to any of claims 2 to 6, wherein the control unit (13) is configured to estimate the temperature of the road surface by analyzing position information and thermal image data of the at least one vehicle (20) received by the communication unit (11).

8. The information processing device (10) according to any of claims 1 to 7, wherein:
the information indicating the road surface condition is information indicating an amount of dust on a road surface; and
the control unit (13) is configured to determine a road surface with an amount of dust larger than a first threshold amount as the water sprinkling place.

9. The information processing device (10) according to any of claims 1 to 8, wherein:
the information indicating the road surface condition is information indicating a pavement condition of a road surface; and
the control unit (13) is configured to determine an unpaved road surface as the water sprinkling place.

10. The information processing device (10) according to any of claims 1 to 9, wherein:
the information indicating the road surface condition is information indicating a traffic volume of moving objects; and
the control unit (13) is configured to determine a road surface with a traffic volume of moving objects smaller than a second threshold volume as the water sprinkling place.

11. The information processing device (10) according to any of claims 1 to 10, wherein the control unit (13) is configured to estimate the vehicle (20) that is going to travel on the water sprinkling place based on position information of the at least one vehicle (20) received by the communication unit (11).

12. The information processing device (10) according to any one of claims 1 to 11, wherein the control unit (13) is configured to determine that a preset reward is going to be given to a vehicle (20) having performed sprinkling of the waste water out of a plurality of the vehicles (20) that is going to travel on the water sprinkling place, in a case where the control unit (13) sends the notification instructing to sprinkle the waste water to the vehicles (20) by the communication unit (11).

13. The information processing device (10) according to claim 12, wherein the vehicles (20) are vehicles (20) that are utilized by a vehicle rental service, and the reward is a discount on rental of the vehicle (20) that is utilized by the vehicle rental service.

14. A control device (40) comprising a control unit (46) configured to cause a water sprinkling device (30) to sprinkle waste water on a water sprinkling place determined based on information indicating a road surface condition.

15. A vehicle (20) comprising:
a control device (40) including a control unit (46); and
a water sprinkling device (30), wherein the control unit is configured to cause the water sprinkling device (30) to sprinkle waste water on a water sprinkling place determined based on information indicating a road surface condition.

16. The vehicle (20) according to claim 15, wherein:
the vehicle (20) is a vehicle of a preset level of driving automation; and
the control unit (46) is configured to control driving of the vehicle (20) such that the water sprinkling place is included in a planned travel route of the vehicle (20).

17. The vehicle (20) according to any of claims 15 to 16, wherein the vehicle (20) is utilized by a delivery service.

18. The vehicle (20) according to any one of claims 15 to 17, wherein the waste water is generated by an air conditioner mounted on the vehicle (20).

19. The vehicle (20) according to any one of claims 15 to 17, wherein:
the vehicle (20) is a fuel cell vehicle; and
the waste water is generated in a fuel cell stack of the vehicle.

20. A water sprinkling method comprising:
determining a water sprinkling place based on information indicating a road surface condition by an information processing device (10); and
sprinkling waste water on the water sprinkling place by at least one vehicle (20).
